# FASCICULE DE BREVET EUROPEEN

(11) **EP 1 426 340 B1**
(45) Date de publication et mention de la délivrance du brevet: **27.10.2010**
(21) Numéro de dépôt: 03292913.5
(22) Date de dépôt: 25.11.2003
(51) Int. Cl.: C03B 37/012, C03B 37/014

(54) **Procédé de recharge par plasma d'une préforme pour fibre optique**
Verfahren zum Übermanteln einer Vorform für optische Fasern mittels Plasma
Process for overcladding an optical fibre preform by plasma

(30) Priorité: 02.12.2002 FR 0215124
(43) Date de publication de la demande: 09.06.2004
(73) Titulaire: Draka Comteq B.V., 1083 HJ Amsterdam (NL)
(72) Inventeur: Appriou, André, 38460 Cremieu (FR); Truchot, Charles, 78300 Poissy (FR); Guina, Sabine, 02100 St. Quentin (FR)
(74) Mandataire: Blokland, Arie

(56) Documents cités:
- EP-A- 0 401 742
- WO-A-99/52832
- GB-A- 2 134 896
- US-A- 4 402 720
- US-A- 4 689 212
- PATENT ABSTRACTS OF JAPAN vol. 1995, no. 02, 31 mars 1995 (1995-03-31) & JP 06 321552 A (FUJIKURA LTD), 22 novembre 1994 (1994-11-22)

## Description

L'invention concerne le domaine des fibres optiques, et plus précisément la fabrication de fibres optiques par dépose d'un matériau de recharge sur une préforme à l'aide d'une torche à plasma.

La recharge par plasma d'une préforme de fibre optique, dite primaire, est une technique permettant d'augmenter notablement le diamètre de la préforme, et par conséquent l'étirage de longueurs de fibres optiques plus importantes. Cette technique est notamment décrite dans les documents EP-0 401 742, EP-0 450 465 et EP-0 658 520.

Le document US 4,689,212 décrit une méthode pour former une préforme de fibre optique comprenant les étapes suivantes: la formation d'un plasma; l'introduction d'un dopant solide dans le plasma à effet de vaporisation de celle-ci, l'introduction de gaz précurseur de silice dans le dopant vaporisé pour effectuer la réaction de celle-ci pour former des particules de silice dopée et l'accumulation des particules de silice dopée sur un substrat. Le plasma est un gaz, comme l'argon, l'hélium, l'oxygène, ou un mélange de ceux ci. Les gaz précurseurs de silice sont le tétrachlorure de silicium et d'oxygène.

Le document GB 2 134 896 décrit un procédé de fabrication de guides d'ondes optiques dans lequel la poudre de dioxyde de silicium est introduite à un débit contrôlé dans un appareil produisant de la chaleur dans lequel elle est liquéfiée ou évaporée dans un flux de gaz et est ainsi déposée sur le substrat en rotation. Comme appareil produisant de la chaleur il est possible d'utiliser, au lieu d'un brûleur à gaz du type oxybrûleur, également un brûleur de plasma avec soit un couplage inductif ou capacitif plasma.

Le document JP 06 321552 décrit un procédé pour la production d'un verre de silice dopé au fluor. Ce verre est formé sur la circonférence d'un membre par une méthode de dépôt par plasma.

En raison des hautes températures générées par le plasma produit par la torche à plasma, l'interaction entre l'azote et l'oxygène contenus dans l'enceinte confinée, où est effectuée la recharge, génère des oxydes d'azote (NOₓ).

Ces oxydes d'azote sont évacués de l'enceinte et collectés par une installation de traitement destinée à limiter les rejets atmosphériques conformément à des normes antipollution. Ces installations de traitement mettent généralement en oeuvre un procédé de dépollution appelé « réduction catalytique sélective (ou SCR pour « Selective Catalytic Reduction ») qui consiste à réchauffer les gaz résiduels à une température comprise entre 300°C et 400°C et à les faire réagir avec un gaz réducteur en présence d'un catalyseur. Une telle installation est coûteuse tant au niveau de sa fabrication et de son implantation qu'au niveau de son exploitation. De plus, ce type d'installation est relativement encombrant. En outre, le réchauffement des gaz résiduels, à l'aide de gaz naturel, produit un fort dégagement de gaz carbonique. Enfin, les gaz résiduels à traiter contiennent généralement de très fines particules de silice, typiquement de taille sub-micronique, qui peuvent entraîner une usure prématurée du catalyseur et par conséquent un surcoût d'exploitation important.

L'invention a donc pour but d'améliorer la situation.

Elle propose à cet effet un procédé de recharge par plasma d'une préforme pour fibre optique, dans lequel, d'une part, on dépose un matériau de recharge sur une préforme primaire, à recharger, à l'aide d'une torche à plasma alimentée en gaz plasmagène et en présence de matériau à base de silice (de type SiO₂), et d'autre part on introduit en amont de la préforme primaire au moins un élément réducteur permettant d'induire par réaction une réduction des oxydes d'azote produits par l'interaction entre l'azote et l'oxygène (contenus dans l'enceinte), en présence du plasma généré par la torche.

De la sorte, la quantité d'oxydes d'azote collectée en sortie de l'enceinte confinée est notablement réduite, permettant ainsi d'utiliser des installations de traitement à capacité réduite, voire même de s'en affranchir, selon la norme environnementale en vigueur.

Préférentiellement, chaque élément réducteur est introduit à l'état gazeux. Mais, on peut également introduire un ou plusieurs éléments réducteurs à l'état solide. On peut également introduire un ou plusieurs éléments réducteurs à l'état gazeux et un ou plusieurs éléments réducteurs à l'état solide. L'introduction d'un élément réducteur à l'état solide s'effectue en aval de la torche à plasma (ou à la périphérie de son extrémité) et en amont de la préforme.

Chaque élément réducteur gazeux est préférentiellement choisi parmi l'hydrogène, l'ammoniac, les hydrocarbures légers, en particulier le méthane, l'éthane, le propane et le butane, et le monoxyde de carbone. Par ailleurs, chaque élément réducteur solide est préférentiellement choisi parmi l'urée et le fluorure d'ammonium, et leurs dérivés contenant des liaisons susceptibles de s'oxyder facilement. D'une manière générale, on peut utiliser tout élément solide, liquide ou gazeux, dès lors que sa décomposition, du fait des hautes températures du plasma, est susceptible de libérer l'effet réducteur d'éléments tels que, par exemple, l'hydrogène.

En outre, lorsque l'on utilise un élément réducteur gazeux, celui-ci peut également constituer une partie au moins du gaz plasmagène, bien entendu sous réserve qu'il soit introduit en amont de la torche à plasma.

Le ou les lieux d'introduction du ou des éléments réducteurs peuvent être très variés. Ainsi, l'un au moins des éléments réducteurs peut être introduit dans la torche à plasma, en amont de sa buse de sortie, comme par exemple dans la zone centrale dans laquelle circule le gaz plasmagène, éventuellement sensiblement en même temps que ce dernier, et/ou à la périphérie de cette zone centrale. En variante ou en complément, l'un au moins des éléments réducteurs peut être introduit dans la torche à plasma, au niveau d'une extrémité de sa buse de sortie, comme par exemple en au moins un endroit à sa périphérie. Egalement en variante ou en complément, l'un au moins des éléments réducteurs peut être introduit en au moins un endroit d'une zone d'interaction comprise entre la buse de sortie et la préforme primaire.

Un dispositif de recharge par plasma d'une préforme pour fibre optique, comporte, d'une part, une torche à plasma, alimentée en gaz plasmagène par des moyens d'alimentation primaire et agencée de manière à permettre le dépôt d'un matériau de recharge sur une préforme primaire, à recharger, en présence d'un matériau à base de silice (de type SiO₂), et d'autre part, des moyens d'alimentation secondaire agencés de manière à introduire en amont de la préforme primaire au moins un élément réducteur permettant d'induire par réaction une réduction des oxydes d'azote produits par l'interaction entre l'azote et l'oxygène (contenus dans l'enceinte), en présence du plasma généré par la torche.

Le dispositif de recharge par plasma pourra comporter des caractéristiques complémentaires qui pourront être prises séparément ou en combinaison, et en particulier :
- des moyens d'alimentation secondaire couplés à la torche à plasma et agencés de manière à introduire l'un au moins des éléments réducteurs à l'intérieur de la torche à plasma, en amont d'une buse de sortie, comme par exemple dans une zone centrale dans laquelle circule le gaz plasmagène et/ou à la périphérie de cette zone centrale ;
- des moyens d'alimentation secondaire couplés à la torche à plasma et agencés de manière à introduire l'un au moins des éléments réducteurs au niveau d'une extrémité de la buse de sortie de la torche à plasma, comme par exemple en au moins un endroit à la périphérie de l'extrémité de cette buse de sortie ;
- des moyens d'alimentation secondaire couplés à la torche à plasma et agencés de manière à introduire l'un au moins des éléments réducteurs en au moins un endroit d'une zone d'interaction comprise entre la buse de sortie de la torche à plasma et la préforme primaire.

D'autres caractéristiques et avantages de l'invention apparaîtront à l'examen de la description détaillée ci-après, et des dessins annexés sur lesquels :
- la figure 1 illustre de façon schématique un premier exemple de réalisation d'un dispositif de recharge par plasma,
- la figure 2 est une vue du dessus de l'extrémité de la buse de sortie de la torche à plasma du dispositif de la figure 1,
- la figure 3 illustre de façon schématique un deuxième exemple de réalisation d'un dispositif de recharge par plasma,
- la figure 4 illustre de façon schématique un troisième exemple de réalisation d'un dispositif de recharge par plasma,
- la figure 5 est une vue du dessus d'un exemple de réalisation d'extrémité de buse de sortie pour la torche à plasma du dispositif des figures 4, 6 et 7,
- la figure 6 illustre de façon schématique un quatrième exemple de réalisation d'un dispositif de recharge par plasma,
- la figure 7 illustre de façon schématique un cinquième exemple de réalisation d'un dispositif de recharge par plasma,
- la figure 8 illustre de façon schématique un sixième exemple de réalisation d'un dispositif de recharge par plasma, et
- la figure 9 illustre de façon schématique un septième exemple de réalisation d'un dispositif de recharge par plasma.

Ces dessins pourront non seulement servir à compléter l'invention, mais aussi contribuer à sa définition, le cas échéant.

Le dispositif de recharge par plasma est dédié à la recharge par plasma d'une préforme pour fibre optique. Il constitue une partie d'une installation de recharge par plasma du type de celles décrites en détail dans les documents EP-0 401 742, EP-0 450 465 et EP-0 658 520, notamment.

Une telle installation comporte généralement, d'une part, un dispositif d'alimentation en matériau à base de silice, comme par exemple des grains de silice (SiO₂) éventuellement mélangés, par exemple, à de l'hexafluorure de soufre destiné à les purifier, et d'autre part une enceinte confinée dans laquelle se trouve logée une partie au moins du dispositif de recharge par plasma et un dispositif de support et de déplacement d'un mandrin constituant la préforme, dite primaire, à recharger, et dans laquelle débouche un injecteur de matériau à base de silice du dispositif d'alimentation. Dans ce qui suit, on considère pour simplifier que le matériau à base de silice est constitué de grains de silice (SiO₂).

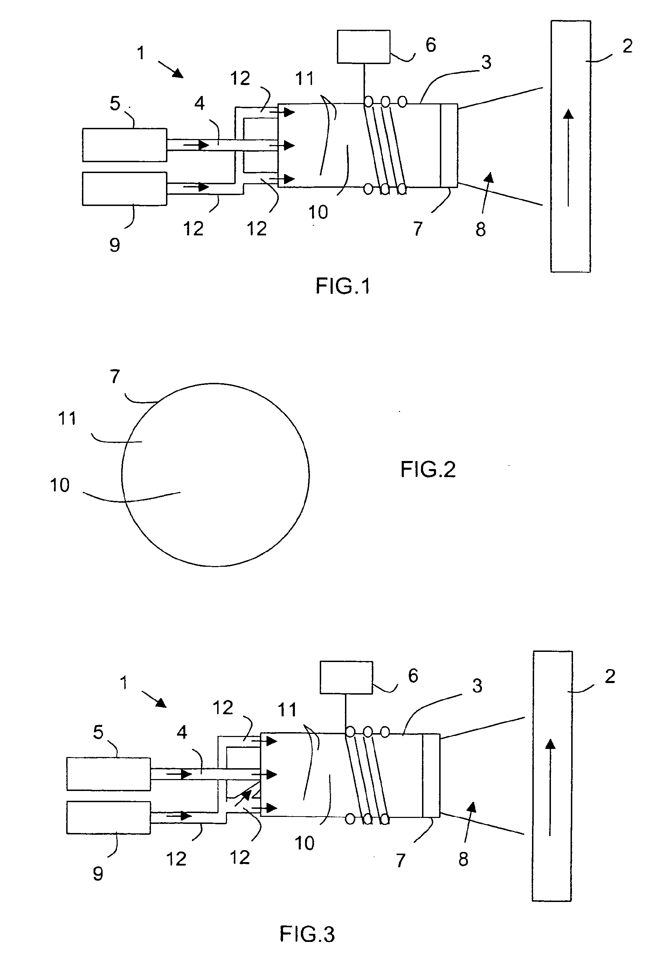

On se réfère tout d'abord aux figures 1 et 2 pour décrire un premier exemple de réalisation d'un dispositif de recharge par plasma.

Le dispositif de recharge par plasma 1 comporte une torche à plasma 3, couplée par une conduite 4 à un module 5 d'alimentation en gaz plasmagène, tel que l'oxygène, l'azote ou l'argon, ou une combinaison de deux d'entre eux, et entourée par un bobinage alimenté en courant à haute fréquence par un générateur 6.

Habituellement, le gaz plasmagène injecté dans la torche à plasma 3 est un mélange d'azote et d'oxygène. Par ailleurs, bien que cela ne soit pas toujours matérialisé sur les figures, une partie du gaz plasmagène est généralement introduite dans une partie centrale 10 de la torche à plasma, tandis que la partie complémentaire est introduite avec un débit différent à la périphérie 11 de la partie centrale 10. Il est important de noter qu'il n'existe pas de cloison de séparation entre les parties centrale 10 et périphérique 11.

Un plasma de gaz ionisé à haute température est généré à l'intérieur de la torche à plasma 3, et délivré à l'extrémité d'une buse de sortie 7 de cette torche. L'injecteur de grains de SiO₂ (non représenté) délivre ses grains dans une zone d'interaction 8 située entre la buse de sortie 7 et le mandrin-préforme 2, qui se déplace en translation et en rotation de façon contrôlée sous l'action du dispositif de support et de déplacement (non représenté). Sous l'action de la chaleur dégagée par le plasma en sortie de la torche 3, les grains de SiO₂ se subliment et viennent se coller sur le mandrin-préforme 2 qui peut ainsi être rechargé en silice.

Le dispositif de recharge 1 comporte en outre au moins un module 9 d'alimentation en élément(s) réducteur(s). Dans ce premier exemple de réalisation, le module d'alimentation 5 alimente en gaz plasmagène (de préférence en air (contenant essentiellement de l'azote et de l'oxygène dans des proportions choisies)) les zones centrale 10 et périphérique 11 de la torche à plasma 3, par la conduite 4, tandis que le module d'alimentation 9 alimente la zone périphérique 11 en élément(s) réducteur(s) par des conduites 12.

Dans ce mode de réalisation, l'élément réducteur et le gaz plasmagène sont mélangés à l'intérieur de la torche à plasma 3.

Pour permettre la réaction de réduction, on peut utiliser tout élément solide, liquide ou gazeux, dont la décomposition, du fait des hautes températures du plasma, permet de libérer l'effet réducteur d'éléments tels que, par exemple, l'hydrogène.

Cependant, chaque élément réducteur est préférentiellement introduit à l'état gazeux. Mais, dans d'autres modes de réalisation, on peut envisager d'introduire un ou plusieurs éléments réducteurs à l'état solide, ou un ou plusieurs éléments réducteurs à l'état gazeux et un ou plusieurs éléments réducteurs à l'état solide. Il est important de noter que l'introduction d'un élément réducteur à l'état solide peut s'effectuer en aval de la torche à plasma 3 (ou à la périphérie de sa buse de sortie 7) et en amont du mandrin-préforme 2.

Chaque élément réducteur gazeux est préférentiellement choisi parmi l'hydrogène (H₂), l'ammoniac (NH₃), le monoxyde de carbone (CO) et les hydrocarbures légers, en particulier le méthane (CH₄), l'éthane (C₂H₆), le propane (C₃H₈) et le butane (C₄H₁₀). Par ailleurs, chaque élément réducteur solide est préférentiellement choisi parmi l'urée, le fluorure d'ammonium (NH₄F) et leurs dérivés contenant des liaisons susceptibles de s'oxyder facilement.

Dans ce premier exemple de réalisation, on introduit par exemple un mélange d'hydrogène, d'air et d'ammoniac dans la zone périphérique 11 de la torche à plasma 3. Mais, on pourrait n'introduire que de l'hydrogène ou que de l'ammoniac, accompagné d'air, ou tout autre élément réducteur seul ou en combinaison.

Les oxydes d'azote générés par l'interaction entre l'oxygène et l'azote contenus dans l'enceinte, du fait des hautes températures du plasma généré par la torche 3, sont réduits par les éléments réducteurs, introduits dans le dispositif de recharge 1 en amont de la sortie de l'enceinte confinée, selon l'une ou l'autre des formules chimiques mentionnées ci-après : 2 NO +2 H₂ → N₂ + 2 H₂O

2 NO₂ + 4 NH₃ + O₂ → 3 N₂ + 6 H₂O

On se réfère maintenant à la figure 3 pour décrire un deuxième exemple de réalisation d'un dispositif de recharge par plasma. Il s'agit en fait d'une variante du dispositif décrit précédemment en référence aux figures 1 et 2.

Dans cet exemple, le module d'alimentation 9 alimente en élément(s) réducteur(s), préférentiellement accompagné(s) d'air, avec les conduites 12, non seulement la zone périphérique 11, mais également la zone centrale 10. Dans une variante non illustrée, on pourrait également envisager que le module d'alimentation 9 comporte deux sous-parties indépendantes alimentant respectivement les zones centrale 10 et périphérique 11 de la torche à plasma 3 en éléments réducteurs différents (préférentiellement accompagnés d'air).

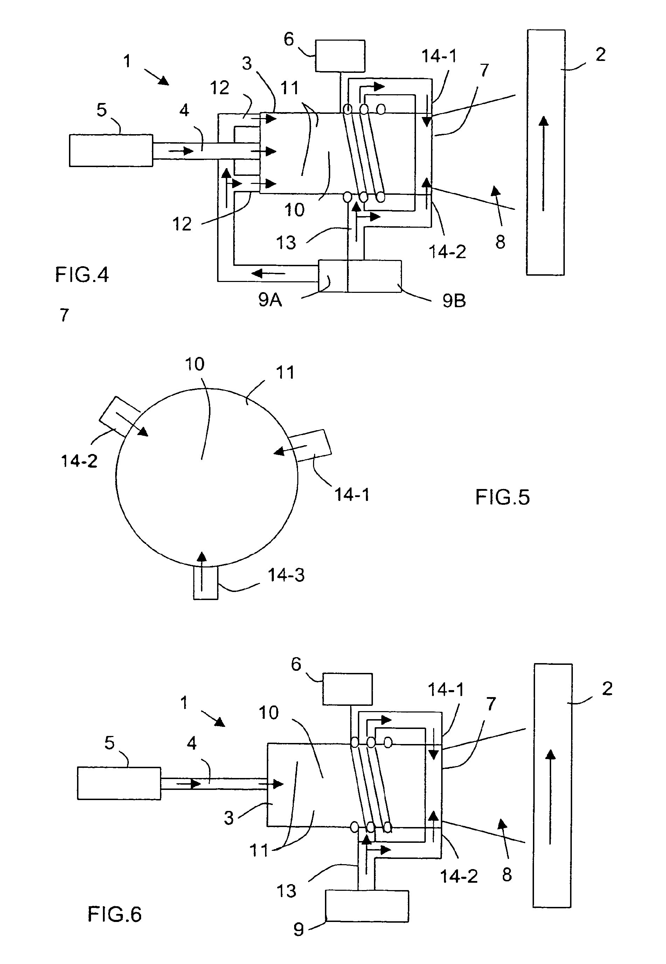

On se réfère maintenant aux figures 4 et 5 pour décrire un troisième exemple de réalisation d'un dispositif de recharge par plasma. Il s'agit d'une seconde variante du dispositif décrit précédemment en référence aux figures 1 et 2.

Dans cet exemple, le module d'alimentation 9 est subdivisé en au moins deux sous-modules 9A et 9B qui alimentent en élément(s) réducteur(s), préférentiellement différents, non seulement la partie amont de la torche à plasma 3 par les conduites 12, mais également la partie aval de la torche, au niveau de l'extrémité de sa buse de sortie 7, par des conduites 13. L'extrémité de la buse de sortie 7 comprend en effet au moins une entrée 14 raccordée à une conduite 13 et agencée de manière à délivrer un ou plusieurs éléments réducteurs à la sortie de la torche à plasma 7, en au moins un endroit. Par exemple, la partie amont de la torche à plasma 3 est alimentée en air et en hydrogène par le sous-module d'alimentation 9A, via les conduites 12, tandis que les entrées 14 de la buse de sortie 7 sont alimentées en ammoniac (NH₃) par le sous-module d'alimentation 9B, via les conduites 13.

Ici, comme cela est illustré sur la figure 5, on prévoit trois entrées 14-1 à 14-3 pour introduire le ou les éléments réducteurs en au moins trois endroits, par exemple de manière à générer un rideau d'élément(s) réducteur(s) susceptible d'être traversé par le plasma. Mais, bien entendu, on pourrait prévoir deux ou quatre entrées, voire plus encore. Par ailleurs, la buse de sortie 7 pourrait être équipée d'une multitude de trous assurant une diffusion homogène et répartie des éléments réducteurs au niveau de l'extrémité de sortie de la torche à plasma 3.

Bien entendu, au lieu de partir du dispositif de recharge de la figure 1 complété par les moyens d'alimentation de la buse de sortie 7 en élément(s) réducteur(s), on pourrait partir du dispositif de recharge de la figure 3 complété par les moyens d'alimentation de la buse de sortie 7 en élément(s) réducteur(s).

Par ailleurs, au lieu d'alimenter en élément(s) réducteur(s) l'extrémité de la buse de sortie 7, on pourrait alimenter la périphérie de celle-ci. Dans ce cas on peut utiliser des injecteurs qui sont alimentés par le module d'alimentation 9 (ou l'un des ses sous-modules, par exemple 9B) et qui ne sont pas forcément solidarisés à la torche à plasma 3.

On se réfère maintenant à la figure 6 pour décrire un quatrième exemple de réalisation d'un dispositif de recharge par plasma. Il s'agit en fait d'une variante du dispositif décrit précédemment en référence aux figures 4 et 5.

Dans cet exemple, le module d'alimentation 9 n'alimente en élément(s) réducteur(s) que la partie aval de la torche à plasma 3, au niveau de sa buse de sortie 7, par des conduites 13, comme dans l'exemple de la figure 4. La buse de sortie 7 comprend au moins une entrée 14 raccordée à une conduite 13 et agencée de manière à délivrer un ou plusieurs éléments réducteurs à la sortie de la torche à plasma 7, en au moins un endroit.

Par exemple, comme cela est le cas de la figure 5, on peut prévoir trois entrées 14-1 à 14-3 pour introduire le ou les éléments réducteurs en au moins trois endroits, de manière à générer un rideau d'élément(s) réducteur(s) susceptible d'être traversé par le plasma. Mais, bien entendu, on pourrait prévoir une, deux ou quatre entrées, voire plus encore. Par ailleurs, la buse de sortie 7 pourrait être équipée d'une multitude de trous assurant une diffusion homogène et répartie des éléments réducteurs au niveau de l'extrémité de sortie de la torche à plasma 3.

Le module d'alimentation 5 peut être utilisé pour alimenter la torche à plasma 3 soit uniquement en gaz plasmagène tel que l'oxygène, l'azote ou l'argon, ou une combinaison de deux d'entre eux, soit en gaz faisant office à la fois de gaz réducteur et de gaz plasmagène, comme par exemple de l'hydrogène (H₂) et/ou de l'ammoniac (NH₃), préférentiellement accompagné d'air.

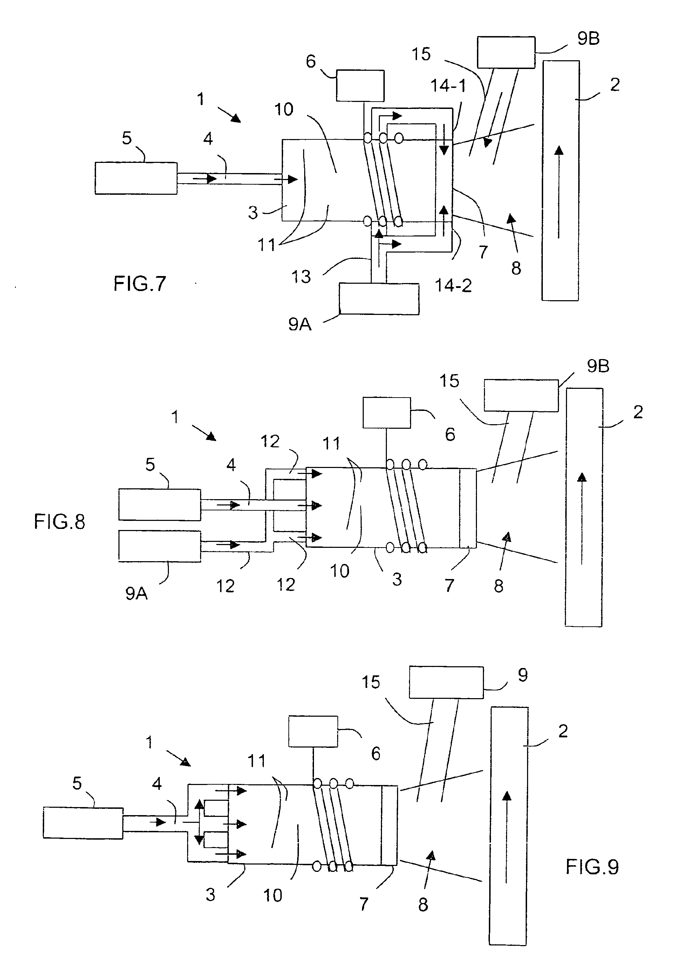

On se réfère maintenant à la figure 7 pour décrire un cinquième exemple de réalisation d'un dispositif de recharge par plasma. Il s'agit en fait d'une variante du dispositif décrit précédemment en référence à la figure 6.

Cet exemple part du dispositif de recharge 1 de la figure 6 et comporte un premier module d'alimentation 9A qui alimente en élément(s) réducteur(s) la partie aval de la torche à plasma 3, au niveau de sa buse de sortie 7, par des conduites 13, et un deuxième module d'alimentation 9B qui alimente en élément(s) réducteur(s) la zone d'interaction 8, par un injecteur 15.

Dans une variante, l'injecteur 15 peut être celui qui est utilisé pour introduire les grains de SiO₂.

Comme pour l'exemple de la figure 6, le module d'alimentation 5 peut être utilisé pour alimenter la torche à plasma 3 soit uniquement en gaz plasmagène, soit en gaz faisant office à la fois de gaz réducteur et de gaz plasmagène.

Ce mode de réalisation est adapté à l'introduction d'élément(s) réducteur(s) à l'état solide ou gazeux en aval de la torche 3.

On se réfère maintenant à la figure 8 pour décrire un sixième exemple de réalisation d'un dispositif de recharge par plasma. Il s'agit en fait d'une variante du dispositif décrit précédemment en référence à la figure 1 ou d'une variante du dispositif décrit précédemment en référence à la figure 7.

Ici, le dispositif de recharge 1 comporte un premier module d'alimentation 9A qui alimente en élément(s) réducteur(s) la zone périphérique 11 de la torche à plasma 3, par des conduites 12, et un deuxième module d'alimentation 9B qui alimente en élément(s) réducteur(s) la zone d'interaction 8, par un injecteur 15.

Dans une variante, l'injecteur 15 peut être celui qui est utilisé pour introduire les grains de SiO₂.

Ce mode de réalisation est adapté à l'introduction d'élément(s) réducteur(s) à l'état gazeux en amont de la torche 3 et d'élément(s) réducteur(s) à l'état solide ou gazeux en aval de la torche 3.

On se réfère maintenant à la figure 9 pour décrire un septième exemple de réalisation d'un dispositif de recharge par plasma.

Dans cet exemple, le dispositif de recharge 1 comporte un module d'alimentation 9 qui alimente en élément(s) réducteur(s) la zone d'interaction 8, par un injecteur 15 (qui peut être celui utilisé pour introduire les grains de SiO₂). Par ailleurs, comme dans l'exemple de la figure 6 le module d'alimentation 5 peut être utilisé pour alimenter la torche à plasma 3 soit uniquement en gaz plasmagène (et air), soit en gaz faisant office à la fois de gaz réducteur et de gaz plasmagène.

Ce mode de réalisation est également adapté à l'introduction d'élément(s) réducteur(s) à l'état gazeux en amont de la torche 3 et d'élément(s) réducteur(s) à l'état solide ou gazeux en aval de la torche 3.

De nombreuses autres variantes de dispositif de recharge 1 peuvent être envisagées à partir de combinaisons des différents modes de réalisation des modules d'alimentation 5, 9, 9A et 9B décrits précédemment en référence aux figures 1 à 9.

L'invention porte sur un procédé de recharge par plasma d'une préforme 2 pour fibre optique.

Celui-ci peut être mis en oeuvre à l'aide du dispositif de recharge 1 et/ou de l'installation présentés ci-avant. Les fonctions et sous-fonctions principales et optionnelles assurées par les étapes de ce procédé étant sensiblement identiques à celles assurées par les différents moyens constituant le dispositif de recharge 1, seules seront résumées ci-après les étapes mettant en oeuvre les fonctions principales du procédé selon l'invention.

Ce procédé consiste, d'une part, à déposer un matériau de recharge sur une préforme primaire 2, à recharger, à l'aide d'une torche à plasma 3 alimentée en gaz plasmagène et en présence d'un matériau à base de silice, et d'autre part, à introduire en amont de la préforme primaire 2 au moins un élément réducteur permettant d'induire par réaction une réduction des oxydes d'azote produits par l'interaction entre l'azote et l'oxygène (contenus dans l'enceinte), en présence du plasma généré par la torche.

L'invention ne se limite pas aux modes de mise en oeuvre de dispositif et de procédé décrits ci-avant, seulement à titre d'exemple, mais elle englobe toutes les variantes que pourra envisager l'homme de l'art dans le cadre des revendications ci-après.

## Revendications

1. Procédé de recharge par plasma d'une préforme (2) pour fibre optique, dans lequel on dépose un matériau de recharge sur une préforme primaire (2), à recharger, à l'aide d'une torche à plasma (3) alimentée en gaz plasmagène et en présence d'un matériau à base de silice, **caractérisé en ce que** l'on introduit en amont de ladite préforme primaire (2) au moins un élément réducteur propre à induire par réaction une réduction des oxydes d'azote produits par interaction entre de l'azote et de l'oxygène, en présence du plasma généré par la torche.

2. Procédé selon la revendication 1, dans lequel l'un au moins des éléments réducteurs est introduit à l'état gazeux.

3. Procédé selon la revendication 2, dans lequel ledit élément réducteur gazeux constitue une partie au moins dudit gaz plasmagène.

4. Procédé selon l'une des revendications 2 et 3, dans lequel ledit élément réducteur gazeux est choisi dans un groupe comprenant au moins l'hydrogène, l'ammoniac, le monoxyde de carbone et les hydrocarbures légers, en particulier le méthane, l'éthane, le propane et le butane.

5. Procédé selon l'une des revendications 1 à 4, dans lequel l'un au moins des éléments réducteurs est introduit à l'état solide.

6. Procédé selon la revendication 5, dans lequel ledit élément réducteur solide est choisi dans un groupe comprenant au moins l'urée et le fluorure d'ammonium.

7. Procédé selon l'une des revendications 1 à 6, dans lequel l'un au moins desdits éléments réducteurs est introduit dans ladite torche à plasma (3), en amont d'une buse de sortie (7).

8. Procédé selon la revendication 7, dans lequel ledit élément réducteur est introduit dans une zone centrale (10) de la torche à plasma (3) dans laquelle circule ledit gaz plasmagène.

9. Procédé selon la revendication 8, dans lequel ledit élément réducteur est introduit dans ladite zone centrale (10) sensiblement en même temps que ledit gaz plasmagène.

10. Procédé selon l'une des revendications 7 à 9, dans lequel ledit élément réducteur est introduit à la périphérie (11) de ladite zone centrale (10) de la torche à plasma (3).

11. Procédé selon l'une des revendications 1 à 10, dans lequel l'un au moins desdits éléments réducteurs est introduit dans ladite torche à plasma (3), au niveau d'une extrémité de ladite buse de sortie (7).

12. Procédé selon la revendication 11, dans lequel ledit élément réducteur est introduit à la périphérie de ladite extrémité de la buse de sortie (7), en au moins un endroit.

13. Procédé selon l'une des revendications 1 à 12, dans lequel l'un au moins desdits éléments réducteurs est introduit dans une zone d'interaction (8) comprise entre ladite buse de sortie (7) de la torche à plasma (3) et ladite préforme primaire (2), en au moins un endroit.

## Claims

1. Process for plasma overcladding of a preform (2) for an optical fibre, wherein an overcladding material is deposited on a primary preform (2) being overclad, with the aid of a plasma torch (3) supplied with plasma-forming gas and in the presence of a silica-based material, **characterised in that** upstream of said primary preform (2) there is introduced at least one reducing agent capable of bringing about, by reaction, reduction of the nitrogen oxides produced by interaction between nitrogen and oxygen, in the presence of the plasma generated by the torch.

2. Process according to claim 1, wherein at least one of the reducing agents is introduced in the gaseous state.

3. Process according to claim 2, wherein said gaseous reducing agent constitutes at least part of said plasma-forming gas.

4. Process according to one of claims 2 and 3, wherein said gaseous reducing agent is selected from a group comprising, at least, hydrogen, ammonia, carbon monoxide and light hydrocarbons, especially methane, ethane, propane and butane.

5. Process according to one of claims 1 to 4, wherein at least one of the reducing agents is introduced in the solid state.

6. Process according to claim 5, wherein said solid reducing agent is selected from a group comprising, at least, urea and ammonium fluoride.

7. Process according to one of claims 1 to 6, wherein at least one of said reducing agents is introduced into said plasma torch (3) upstream of an outlet nozzle (7).

8. Process according to claim 7, wherein said reducing agent is introduced into a central zone (10) of the plasma torch (3) in which said plasma-forming gas is flowing.

9. Process according to claim 8, wherein said reducing agent is introduced into said central zone (10) at substantially the same time as said plasma-forming gas.

10. Process according to one of claims 7 to 9, wherein said reducing agent is introduced at the periphery (11) of said central zone (10) of the plasma torch (3).

11. Process according to one of claims 1 to 10, wherein at least one of said reducing agents is introduced into said plasma torch (3) at an extremity of said outlet nozzle (7).

12. Process according to claim 11, wherein said reducing agent is introduced at the periphery of said extremity of the outlet nozzle (7), at at least one location.

13. Process according to one of claims 1 to 12, wherein at least one of said reducing agents is introduced into an interaction zone (8) between said outlet nozzle (7) of the plasma torch (3) and said primary preform (2), at at least one location.

## Patentansprüche

1. Verfahren zum Nachfüllen einer Vorform (2) für eine optische Faser mittels Plasma, bei welchem ein Nachfüllmaterial mit Hilfe eines Plasmabrenners (3), welcher mit plasmagenem Gas versorgt wird, unter Anwesenheit eines auf Silizium basierenden Materials auf einer nachzufüllenden primären Vorform (2) deponiert wird, **dadurch gekennzeichnet, dass** stromaufwärts der primären Vorform (2) mindestens ein reduzierendes Element, welches die Eigenschaft hat, durch eine Reaktion eine Reduktion von Stickstoffoxiden zu induzieren, welche durch Interaktion zwischen Stickstoff und Sauerstoff in Anwesenheit des durch den Brenner erzeugten Plasmas erzeugt werden, eingeführt wird.

2. Verfahren nach Anspruch 1, bei welchem mindestens eines der reduzierenden Elemente in gasförmigem Zustand eingeführt wird.

3. Verfahren nach Anspruch 2, bei welchem das gasförmige reduzierende Element zumindest einen Teil des plasmagenen Gases bildet.

4. Verfahren nach einem der Ansprüche 2 und 3, bei welchem das gasförmige reduzierende Element ausgewählt ist aus einer Gruppe, umfassend zumindest Wasserstoff, Ammoniak, Kohlenmonoxid und niedere Kohlenwasserstoffe, insbesondere Methan, Ethan, Propan und Butan.

5. Verfahren nach einem der Ansprüche 1 bis 4, bei welchem mindestens eines der reduzierenden Elemente in festem Zustand eingeführt wird.

6. Verfahren nach Anspruch 5, bei welchem das feste reduzierende Element ausgewählt ist aus einer Gruppe, umfassend zumindest Harnstoff und Ammoniumfluorid.

7. Verfahren nach einem der Ansprüche 1 bis 6, bei welchem zumindest eines der reduzierenden Elemente in dem Plasmabrenner (3) stromaufwärts einer Ausgangsdüse (7) eingeführt wird.

8. Verfahren nach Anspruch 7, bei welchem das reduzierende Element in einer zentralen Zone (10) des Plasmabrenners (3), in welcher das plasmagene Gas zirkuliert, eingeführt wird.

9. Verfahren nach Anspruch 8, bei welchem das reduzierende Element in die zentrale Zone (10) im Wesentlichen zur gleichen Zeit wie das plasmagene Gas eingeführt wird.

10. Verfahren nach einem der Ansprüche 7 bis 9, bei welchem das reduzierende Element am Rand (11) der zentralen Zone (10) des Plasmabrenners (3) eingeführt wird.

11. Verfahren nach einem der Ansprüche 1 bis 10, bei welchem mindestens eines der reduzierenden Elemente in dem Plasmabrenner (3) auf Höhe eines Endes der Ausgangsdüse (7) eingeführt wird.

12. Verfahren nach Anspruch 11, bei welchem das reduzierende Element am Rand des Endes der Ausgangsdüse (7) an mindestens einem Ort eingeführt wird.

13. Verfahren nach einem der Ansprüche 1 bis 12, bei welchem mindestens eines der reduzierenden Elemente in eine Interaktionszone (8), welche zwischen der Ausgangsdüse (7) des Plasmabrenners (3) und der primären Vorform (2) liegt, an mindestens einem Ort eingeführt wird.
